# EUROPÄISCHE PATENTSCHRIFT

(11) **EP 3 549 863 B1**
(45) Veröffentlichungstag und Bekanntmachung des Hinweises auf die Patenterteilung: **09.03.2022**
(21) Anmeldenummer: 19167472.0
(22) Anmeldetag: 05.04.2019
(51) Int. Cl.: B64D 11/06, B60N 2/015, B60N 2/07

(54) **BEFESTIGUNGSSYSTEM FÜR PASSAGIERSITZE IN EINER KABINE EINES FAHRZEUGS**
FASTENING SYSTEM FOR PASSENGER SEATS IN A CABIN OF A VEHICLE
SYSTÈME DE FIXATION DE SIÈGES DE PASSAGER DANS UNE CABINE DE VÉHICULE

(30) Priorität: 06.04.2018 DE 102018108190
(43) Veröffentlichungstag der Anmeldung: 09.10.2019
(73) Patentinhaber: Airbus Operations GmbH, 21129 Hamburg (DE)
(72) Erfinder: Gross, Claus-Peter, 21129 Hamburg (DE)
(74) Vertreter: LKGLOBAL Lorenz & Kopf PartG mbB Patentanwälte

(56) Entgegenhaltungen:
- EP-A2- 2 695 813
- WO-A1-2016/181623
- WO-A1-2017/064288
- DE-A1-102015 116 414
- DE-A1-102015 122 675
- JP-A- 2007 196 843

## Beschreibung

### TECHNISCHES GEBIET

Die Erfindung betrifft ein Befestigungssystem für Passagiersitze in einer Kabine eines Fahrzeugs, ein Passagiersitzsystem für eine Kabine eines Fahrzeugs und ein Fahrzeug mit einer Kabine.

### HINTERGRUND DER ERFINDUNG

Oft werden in Fahrzeugen, die dem Transport von Passagieren dienen, Fußbodenschienen zur positionsvariablen Befestigung von Passagiersitzen und anderen Einrichtungen eingesetzt. Die Fußbodenschienen können Befestigungsmittel besitzen, die in einem bestimmten Raster angeordnet sind. Das Raster erlaubt, unterschiedliche Befestigungspositionen an den Fußbodenschienen zu realisieren. Eine Befestigung des betreffenden Objekts an einer gewünschten Position erfolgt üblicherweise durch eine Arretiereinrichtung, welche eine form- und/oder kraftschlüssige Arretierung mit Befestigungsmitteln der Fußbodenschiene durchführt.

Zudem ist bekannt, insbesondere in Flugzeugen je nach Wunsch oder temporärer Anforderung einen Abstand zwischen in einer Längsrichtung aufeinanderfolgenden Sitzen zu bestimmen und gegebenenfalls gelegentlich oder regelmäßig zu ändern.

Dazu werden die Arretiereinrichtungen betreffender Sitze gelöst, anschließend werden die Sitze entlang der Fußbodenschiene verschoben und die Arretiereinrichtungen werden wieder arretiert. Das Ändern des Abstands insbesondere zwischen zwei hintereinander angeordneten Passagiersitzen kann die Bestuhlungsklasse des betreffenden Abschnitts in der Passagierkabine ändern. Es ist bekannt, Gleitführungen mit Führungsschienen zur erleichterten Verschiebbarkeit einzusetzen. DE 10 2009 004 987 B4 zeigt einen verschiebbaren Sitz für ein Transportmittel, mit einem Sitzgestell zum verschiebbaren Anbringen an einer Trägerstruktur des Transportmittels, wobei der Sitz derart ausgeführt ist, dass zwei im Transportmittel hintereinander angeordnete Sitze in einem zusammen- und zumindest teilweise ineinandergeschobenen Lagerzustand eine geringere gemeinsame Grundfläche aufweisen als in einem auseinandergeschobenen Benutzungszustand.

DE 10 2013 103 662 A1 zeigt eine Haltevorrichtung zum Befestigen von Passagiersitzen in einem Transportmittel, die ein Sitzbeinfixierelement, ein Gleitelement und ein Schienenelement aufweist.

EP 2 695 813 A2 zeigt einen auf Schienen montierten Flugzeugsitz mit Sitzschienen-Verriegelungsstiften, die sich unabhängig voneinander bewegen können, um auf einem verformten Boden mit der Sitzschiene in Eingriff zu bleiben. Der Sitz ist über mit den Sitzschienen in Eingriff stehenden Rädern verschiebbar.

JP 2007 196843 A zeigt eine Schiene mit einem Einschnürungsbereich und einen Schlitten, der Rollen aufweist, die unter eine Oberseite der Schiene ragen.

DE 10 2015 122675 A1 zeigt eine Sicherungsvorrichtung, welche eingerichtet ist, um an eine bewegliche Einheit eines Linearführungsmechanismus gekoppelt zu werden, und welche eingerichtet ist, um die bewegliche Einheit an einer Führungsschiene des Linearführungsmechanismus zu sichern.

### ZUSAMMENFASSUNG DER ERFINDUNG

Für die Verwendung von vorangehend genannten Führungsschienen sind üblicherweise Abdeckungen erforderlich, welche an die jeweilige Position der auf den Führungsschienen verschobenen Passagiersitze anzupassen ist. Die Anpassung kann durch die Verschiebebewegung des betreffenden Passagiersitzes erfolgen oder durch manuelle Interaktion eines Benutzers.

Eine Aufgabe der Erfindung liegt darin, ein Befestigungssystem für Passagiersitze in einer Kabine eines Fahrzeugs vorzuschlagen, bei dem eine angepasste Abdeckung einer Führungsschiene möglichst einfach realisierbar ist, oder bei dem die Anpassung selbst überhaupt nicht erforderlich ist.

Die Aufgabe wird durch ein Befestigungssystem für Passagiersitze mit den Merkmalen des Anspruchs 1 gelöst. Vorteilhafte Ausführungsformen und Weiterbildungen sind den Unteransprüchen und der nachfolgenden Beschreibung zu entnehmen.

Es wird ein Befestigungssystem für Passagiersitze in einer Kabine eines Fahrzeugs vorgeschlagen, das Befestigungssystem aufweisend zwei oder mehr in oder an einem Fußboden der Kabine integrierbare Führungsschienen, und mehrere mit den Führungsschienen in Eingriff bringbare Schlitten, welche einen Flansch zum Verbinden mit einem Passagiersitz aufweisen, um den betreffenden Passagiersitz an einer Führungsschiene zu haltern, wobei jede Führungsschiene einen Profilquerschnitt senkrecht zu einer Haupterstreckungsachse aufweist, der einen Basisbereich, einen Auflagebereich und mindestens eine dazwischenliegende Hinterschneidung besitzt, wobei jeder Schlitten einen Hohlraum aufweist, der komplementär zu dem Profilquerschnitt der Schiene ausgebildet ist und einen mit der Hinterschneidung in Eingriff bringbaren Einschnürungsbereich aufweist, so dass der Auflagebereich durch den Hohlraum des Schlittens umschließbar ist, und wobei jeder Schlitten mindestens eine drehbar gelagerte Rolle besitzt, die in den Einschnürungsbereich ragt und mit einer Oberfläche der Führungsschiene in Flächenkontakt bringbar ist.

Im Sinne der Erfindung ist eine Führungsschiene ein längliches Bauteil, welches an oder in einem Fußboden einer Kabine des betreffenden Fahrzeugs angeordnet werden kann. Die Führungsschiene kann direkt mit einer den Fußboden tragenden Struktur verbunden sein. Alternativ kann eine Führungsschiene auch mit Fußbodenschienen verbunden sein, welche mit der den Fußboden tragenden Struktur verbunden sind. In letzterem Fall kann eine Führungsschiene auch nachträglich in einem Fahrzeug angebracht werden, indem die vorhandenen Fußbodenschienen hiermit ausgestattet werden. Die Führungsschienen sind dazu vorgesehen, einen genannten Schlitten entlang einer vorgegebenen Bewegungsrichtung zu führen und sämtliche Lasten, die im Zusammenhang mit von dem Schlitten getragenen Passagiersitzen stehen, in die Führungsschienen einzuleiten. Folglich sind die Führungsschienen so auszulegen, dass sie entlang ihrer gesamten Länge fest mit einer Fußbodenstruktur verbindbar sind und mechanisch dazu in der Lage sind, sämtliche auftretenden Lasten aufzunehmen.

Die Führungsschienen besitzen einen Profilquerschnitt, der zur Erläuterung der erfindungswesentlichen Vorteile senkrecht zu ihrer Haupterstreckungsachse betrachtet wird. Dieser Profilquerschnitt könnte bevorzugt symmetrisch sein, dies ist jedoch nicht zwangsläufig erforderlich. Der Profilquerschnitt zeichnet sich durch zwei prägnante Bereiche auf, die als Basisbereich und Auflagebereich bezeichnet werden. Der Basisbereich ist dazu vorgesehen, eine Basis für die Führungsschiene darzustellen, welche mit einer anderen Einrichtung verbindbar ist. Er könnte etwa Verbindungsmittel aufweisen, die das Verbinden mit einer Struktur und/oder einer Fußbodenschiene erlauben. In einem einfachen Fall kann der Basisbereich eine flächige Form aufweisen und beispielsweise in Form eines Flanschs oder Gurtes wie bei Profilstählen ausgeführt sein. Der Auflagebereich indes ist dazu vorgesehen, in die Kabine hinein zu ragen, um dort einen Eingriff mit dem Schlitten hervorzurufen. Hierzu ist zwischen dem Basisbereich und dem Auflagebereich eine Hinterschneidung angeordnet, welche das Umschließen des Auflagebereichs durch den Hohlraum des Schlittens erlaubt.

Zum Führen des Schlittens auf der Führungsschiene weist jeder Schlitten mindestens eine drehbar gelagerte Rolle auf. Diese ragt in den Einschnürungsbereich des Hohlraums hinein und kann daher mit der Oberfläche der Führungsschiene in Flächenkontakt gebracht werden. Der Flächenkontakt bezieht sich hierbei auf einen Kontakt zwischen der Umfangsfläche der mindestens einen Rolle und der Oberfläche des Auflagebereichs. Aus dem Erfordernis des Flächenkontakts ergibt sich eine aufeinander abgestimmte Gestaltung insbesondere des Auflagebereichs und der Kontur der Umfangsfläche der betreffenden Rollen. Durch den Flächenkontakt wird beim Bewegen des Schlittens entlang der Haupterstreckungsrichtung der Führungsschiene die Rolle in Drehung, so dass die Rolle an der Führungsschiene entlangläuft.

Die Verwendung einer Rolle erlaubt das definierte Einleiten von Kräften über den betreffenden Flächenkontakt in die Führungsschiene. Durch Auswahl der Größe der betreffenden Rolle, der Beschaffenheit und geometrischen Ausgestaltung ihrer Oberfläche, der Anzahl der verwendeten Rollen und ihrer Ausrichtung zu dem Auflagebereich kann bestimmt werden, wie hoch die zu übertragenden Kräfte sein können. Gleichzeitig können die Reibungskräfte deutlich reduziert werden. Zudem ist eine derartige Konstellation deutlich robuster gegenüber Abweichungen von Bauteilmaßen und Verschmutzungen.

Die Kontur der Hinterschneidung sowie des Auflagebereichs an sich können insgesamt abgerundet gestaltet sein, was auftretende Kerbkräfte minimiert und zudem die Fertigung vereinfacht. Das Fehlen von scharfen Kanten und schmalen Hohlräumen führt außerdem zu einer geringeren Anfälligkeit für eventuelle Verschmutzungen.

Insgesamt kann das erfindungsgemäße Befestigungssystem eine leichtgängige Möglichkeit zur Verschiebung von Passagiersitzen realisieren, die Anfälligkeit für Verschmutzungen verringern und eine belastungsorientierte Auslegung vereinfachen.

Zur weiteren Reduktion möglicher Verschmutzungen kann das Befestigungssystem ferner ein flächiges Abdeckelement aufweisen, das auf dem Auflagebereich fixiert ist. Das Abdeckelement kann etwa in Form eines Stoffes realisiert sein, der einem angrenzenden Teppich entspricht. Es ist aufgrund der vorteilhaften Ausgestaltung der Führungsschiene nicht erforderlich, ein Abdeckelement stets der aktuellen Position des Schlittens nachzuführen. Vielmehr kann durch die Verwendung von Rollen ein ausreichender Abstand zwischen dem Schlitten und einer Oberseite der Führungsschiene vorliegen, der das dauerhafte Anbringen eines Abdeckelements erlaubt. Das Fixieren kann das Aufkleben, das Aufstecken oder eine andere Art von fester oder lösbarer Verbindung umfassen.

In einer vorteilhaften Ausführungsform weist der Profilquerschnitt zwei einander gegenüberliegende Hinterschneidungen auf. Dadurch kann insbesondere ein symmetrischer Profilquerschnitt realisiert werden. Die einzuleitende Last von einem Passagiersitz oder einer Passagiersitzgruppe auf die Führungsschiene kann daher an jedem Schlitten symmetrisch erfolgen, wenn der Profilquerschnitt beidseitig im Kontakt mit Rollen steht.

Der Schlitten könnte für jede Hinterschneidung zwei voneinander beabstandete Rollen aufweisen, die jeweils mit der Oberfläche der Führungsschiene in Flächenkontakt bringbar sind. Weist der Profilquerschnitt zwei Hinterschneidungen auf, besitzt der Schlitten folglich mindestens vier Rollen. Beide Rollenpaare, welche jeweils aus zwei entlang der Haupterstreckungsrichtung voneinander beabstandet angeordneten Rollen besteht, führen zu einer exakten Ausrichtung des Schlittens relativ zu der Führungsschiene. Für jeden Passagiersitz oder jede Passagiersitzgruppe, welche auf einem einzigen Gestell realisiert ist, sind folglich mindestens sechzehn Rollen vorhanden, sofern jeder Fuß des betreffenden Gestells mit einem individuellen Schlitten ausgestattet ist.

Der Profilquerschnitt könnte demnach zwei einander gegenüberliegende Hinterschneidungen aufweisen, wobei der Schlitten zumindest ein Paar einander gegenüberliegender Rollen zum Eingreifen in zwei einander gegenüberliegende Bereiche des Profilquerschnitts besitzt.

Alle Rollen könnten auf einer gemeinsamen Ebene angeordnet sein und um eine Achse drehbar gelagert sein, die senkrecht zu der gemeinsamen Ebene steht. Die gemeinsame Ebene kann bei der Verwendung von insgesamt vier Rollen parallel zu dem Fußboden verlaufen, auf dem das Befestigungssystem angeordnet wird. Die Bewegung der Umfangsfläche jeder Rolle liegt bei vektorieller Betrachtung demzufolge ebenfalls in dieser Ebene. Hierdurch kann ein flacher Schlitten realisiert werden.

Mindestens ein Schlitten könnte einen bewegbar gelagerten Arretierkörper aufweisen, der in den Hohlraum hinein und aus dem Hohlraum heraus bewegbar ist, wobei die Führungsschiene Rastöffnungen aufweist, die bei im Eingriff mit der Führungsschiene befindlichem Schlitten mit dem Arretierkörper in Eingriff bringbar sind. Der Arretierkörper dient der Fixierung des Schlittens an der Führungsschiene. Er kann praktisch jede beliebige Form aufweisen, die ihm die Fähigkeit verleiht, in eine Rastöffnung der Führungsschiene hinein und aus dieser heraus bewegt zu werden. In einem besonders einfachen Fall kann der Arretierkörper eine längliche Form aufweisen, insbesondere mit einem weitgehend gleichbleibenden Profilquerschnitt. Der Arretierkörper könnte bevorzugt senkrecht zu einer Ebene bewegt werden, welche parallel zu dem Fußboden liegt. Die Rastöffnungen der Führungsschiene sind selbstverständlich komplementär zu dem Arretierkörper zu gestalten, so dass der Arretierkörper leicht in der betreffenden Rastöffnung bewegbar ist. Die Abdeckung der Rastöffnungen durch ein Abdeckelement ist nicht zwangsläufig erforderlich. Es ist jedoch vorstellbar, neben einem vorangehend erwähnten, fest verklebten Abdeckelement für die einzelnen Rastöffnungen separate Elemente einzusetzen, die leicht von den Rastöffnungen entfernbar sind.

Bevorzugt ist der Arretierkörper ein federnd gelagerter Stift, der durch eine Federkraft in eine Neutralstellung gedrängt wird, in der der Stift in dem Hohlraum liegt. Hierdurch wird der Arretierkörper stets in eine den Schlitten arretierende Stellung gedrängt. Der Arretierkörper kann für einen Flächenkontakt mit einer Feder einen entsprechenden Absatz bzw. eine Anschlagsfläche aufweisen. Soll der betreffende Passagiersitz oder die betreffende Passagiersitzgruppe entlang der Führungsschiene verschoben werden, kann die Arretierung durch Lösen des Arretierkörpers aus der Neutralstellung eliminiert werden, um dann den Passagiersitz bzw. die Passagiersitzgruppe zu verschieben. Bei dem Verschiebevorgang kann durch eine entsprechende Sicherung oder durch manuelles Einwirken auf den Arretierkörper, beispielsweise über einen Bowdenzug oder dergleichen, das Einschnappen des Arretierkörpers in eine Rastöffnung verhindert werden. Erreicht der betreffende Schlitten seine vorbestimmte Position, kann der Arretierkörper wieder in eine Rastöffnung einschnappen. Hierzu ist dessen vorübergehende Sicherung aufzuheben.

In einer besonders vorteilhaften Ausführungsform ist der Arretierkörper in einer Führung angeordnet und schließt mit einer Außenfläche der Führung ab, wenn er in seiner Neutralstellung ist. In einer nicht arretierten Stellung fällt der Arretierkörper optisch bereits deutlich auf. Ein Benutzer kann demzufolge sehr leicht erkennen, ob eine Arretierung erfolgreich durchgeführt ist. Durch eine optisch auffällige Farbgebung kann dies noch weiter gesteigert werden. Es ist vorstellbar, einen aus der Führung ragenden Abschnitt des Arretierkörpers mit einer leuchtenden Farbe, beispielsweise gelb, orange, rot oder einer Neonfarbe, auszustatten.

Ferner könnte die Rolle eine umfangsseitig verlaufende Rille aufweisen, die an eine Kontur der Oberfläche der Führungsschiene angepasst ist. Die Rille erlaubt die Kraftübertragung in einer Richtung, die der Erstreckung der Rotationsachse der jeweiligen Rolle entspricht. Während die Kraftübertragung in radialer Richtung durch die Umfangsfläche jeder Rolle bereits erreicht wird, kann die Rille in Kombination mit dem Auflagebereich zu einer Kraftübertragung in axialer Richtung führen. Es ist bevorzugt, jede der Rollen eines Schlittens mit einer solchen Rille auszustatten.

Bevorzugt weist der Schlitten mindestens eine in den Einschnürungsbereich ragende Nase auf, die mit der Hinterschneidung eine Spielpassung bildet. Die Sicherheit bei der Verwendung des erfindungsgemäßen Befestigungssystems wird hierdurch gesteigert. Sollte der unwahrscheinliche Fall einer mechanischen Einschränkung einer der Rollen auftreten, kann die Nase eine formschlüssige Verbindung mit der Führungsschiene eingehen. Während des normalen Zustands, in dem die Führungsschiene von sämtlichen Rollen umgriffen ist, stört die Nase aufgrund der Spielpassung jedoch nicht. Sie weist dann bei jeder Position des Schlittens entlang der Haupterstreckungsrichtung der Führungsschiene einen gewissen Abstand zu der Oberfläche der Führungsschiene auf und kann folglich eine Verschiebebewegung nicht beeinträchtigen.

Die Erfindung betrifft ferner ein Passagiersitzsystem für eine Kabine eines Fahrzeugs, das mindestens eine Passagiersitzeinrichtung mit einem Sitzgestell, und ein Befestigungssystem nach der vorhergehenden Beschreibung aufweist, wobei das Befestigungssystem zwei voneinander beabstandete, parallel zueinander verlaufende Führungsschienen aufweist, wobei das Sitzgestell der mindestens einen Passagiersitzeinrichtung zwei Paare voneinander beabstandeter Sitzbeine aufweist, welche jeweils mit einem Schlitten verbunden sind, und wobei die Schlitten in Eingriff mit den Führungsschienen sind.

Bei dem Passagiersitzsystem können, wie vorangehend bereits erwähnt, die Führungsschienen auf Sitzschienen befestigbar sein, die in einem Fußboden einer Kabine des Fahrzeugs angeordnet sind.

Schließlich betrifft die Erfindung ein Fahrzeug mit einer Kabine, einem Kabinenfußboden und mindestens einem derartigen Passagiersitzsystem.

Bevorzugt ist das Fahrzeug ein Flugzeug, insbesondere ein Verkehrsflugzeug.

### KURZE BESCHREIBUNG DER FIGUREN

Weitere Merkmale, Vorteile und Anwendungsmöglichkeiten der vorliegenden Erfindung ergeben sich aus der nachfolgenden Beschreibung der Ausführungsbeispiele und den Figuren. In den Figuren stehen weiterhin gleiche Bezugszeichen für gleiche oder ähnliche Objekte.
Fig. 1 bis 4 zeigen einen Schlitten eines Befestigungssystems in unterschiedlichen Ansichten.
Fig. 5 und 6 zeigen ein Befestigungssystem in einer räumlichen Darstellung mit Rollen (Fig. 5) und ohne Rollen (Fig. 6).
Fig. 7 bis 12 zeigen das Befestigungssystem in unterschiedlichen Details mit angebundenen Sitzfüßen.
Fig. 13 zeigt einen Passagiersitz, der mittels eines Befestigungssystems an einem Boden einer Kabine angeordnet ist in einer Seitenansicht.
Fig. 14 zeigt ein Flugzeug mit einer Kabine und einem darin angeordneten Befestigungssystem.

### DETAILLIERTE DARSTELLUNG EXEMPLARISCHER

### AUSFÜHRUNGSFORMEN

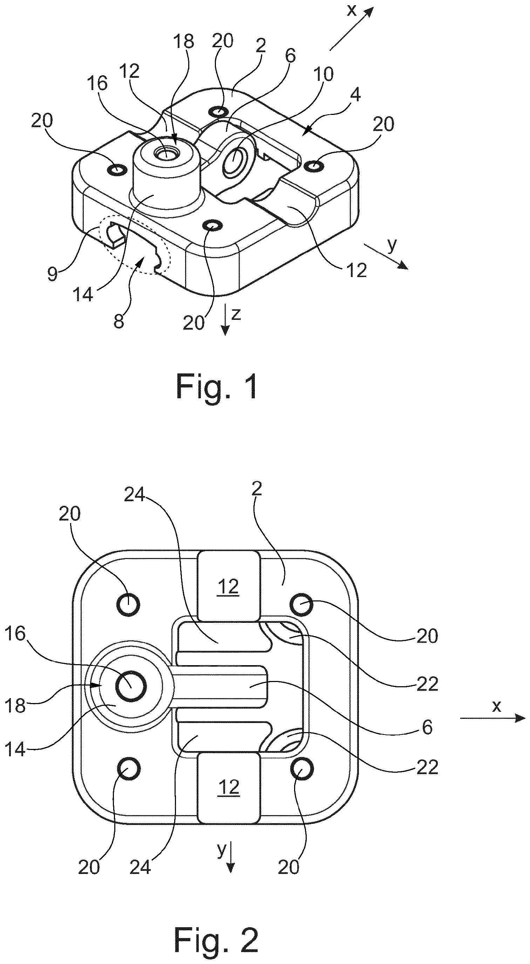

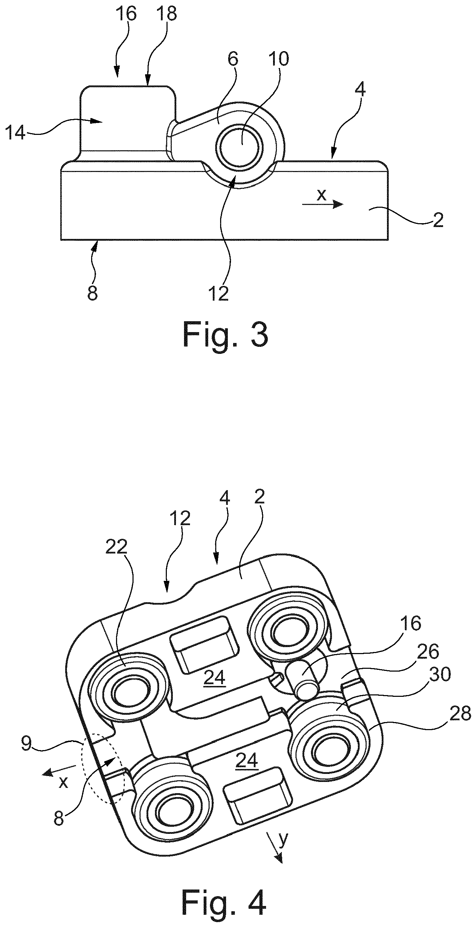

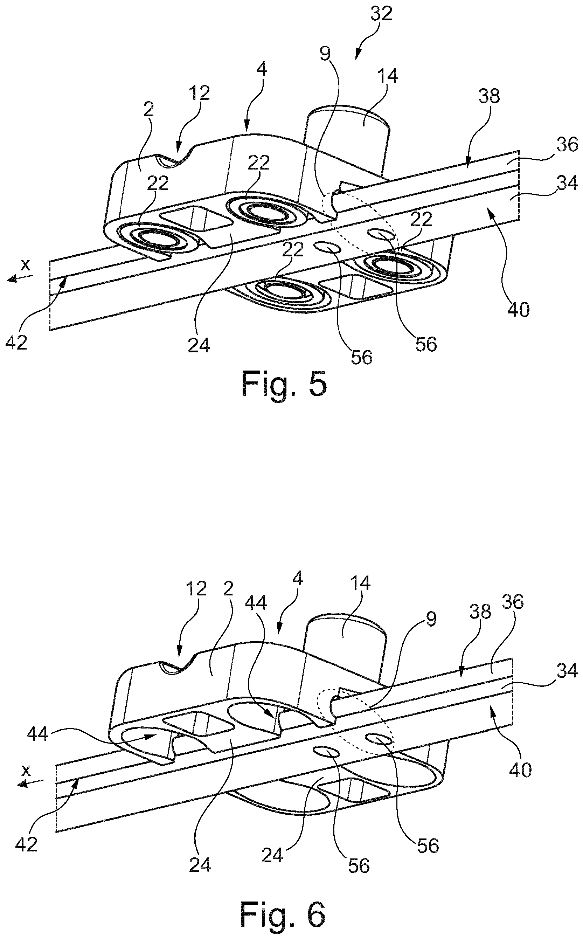

Fig. 1 zeigt einen Schlitten 2 zur Verwendung in einem Befestigungssystem, welches beispielsweise in Fig. 5 gezeigt wird. Der Schlitten 2 weist eine beispielhaft annähernd quadratische Grundform mit abgerundeten Ecken auf. In Fig. 1 ist besonders eine Oberseite 4 gezeigt, an der ein Flansch 6 zum Befestigen eines Passagiersitzes angeordnet ist. Der Schlitten 2 weist einen Hohlraum 8 auf, der sich entlang einer Längsachse x erstreckt. Seine mögliche Ausgestaltung wird in weiter nachfolgenden Figuren, insbesondere ab Fig. 4 dargestellt. In dieser Darstellung ist erkennbar, dass der Hohlraum 8 einen Profilquerschnitt aufweist, der einen Einschnürungsbereich 9 besitzt. Dies bedeutet, dass der Profilquerschnitt an einer Unterseite, die von dem Flansch 6 abgewandt ist, enger ist als an weiter zur Oberseite gewandten Bereichen, die näher zu dem Flansch 6 gerichtet sind.

Der Flansch 6 weist exemplarisch eine Ringform auf und ist einseitig starr an dem Schlitten 2 angebunden. Selbstverständlich kann der Flansch 6 auch beidseitig an dem Schlitten 2 angebunden sein. Dies kann insbesondere von der Art und Ausführung des zu befestigenden Sitzfußes abhängen und keine der beiden Varianten wird ausgeschlossen. Eine Öffnung 10 des Flanschs 6 erstreckt sich in einer Querrichtung y und wird durch Ausbuchtungen 12 an der Oberseite 4 ergänzt. Die Ausbuchtungen 12 sind derart geformt und positioniert, dass ein längliches, beispielhaft zylindrisches Element in beiden Ausbuchtungen 12 aufliegen könnte und sich hierbei durch die Öffnung 10 des Flansch 6 erstreckt. Dadurch wird die Erreichbarkeit eines Verbindungsmittels, welches sich durch den Flansch erstreckt, mittels eines geeigneten Werkzeugs sichergestellt. Selbstverständlich sind auch andere Varianten denkbar und diese Darstellung ist nur als ein mögliches Beispiel zu verstehen.

In x-Richtung hinter dem Flansch 6 befindet sich eine Führung 14, welche einen Arretierkörper 16 aufnimmt. Dieser ist entlang einer z-Richtung, welche senkrecht zu einer von der x-Achse und der y-Achse aufgespannt Ebene ist, bewegbar. Der Arretierkörper 16 kann in den Hohlraum 8 hinein oder aus diesem heraus bewegt werden. In der gezeigten Position befindet sich der Arretierkörper 16 in einer Neutralstellung und schließt annähernd bündig mit einer Außenfläche 18 der Führung 14 ab. An der Oberfläche 4 sind weiterhin vier Achsen 20 erkennbar, welche zur Lagerung von Rollen vorgesehen sind, welche weiter nachfolgenden Figuren entnommen werden können.

Fig. 2 zeigt den Schlitten 2 in einer Draufsicht. Der Schlitten 2 entspricht vollständig dem Schlitten 2 aus der Fig. 1. Allerdings sind hier zumindest zwei Rollen 22 erkennbar, die jeweils an einer Achse 20 gelagert werden. Die Rollen 22 sind derart ausgerichtet, dass sie in der x-y-Ebene liegen. Sie können daher eine Führungsschiene, die in dem Hohlraum 8 entlang der x-Achse verläuft, umschließen. Dadurch erfolgt eine Führung entlang der x-Achse. Wie anhand der beiden anderen Achsen 20 angedeutet, befindet sich ein weiteres Rollenpaar mit zwei einander gegenüberliegenden Rollen 22 auf der entgegengesetzten Seite entlang der X-Richtung. Zwei in y-Richtung einander gegenüberliegende Nasen 24 ergänzen einen Zwischenraum zwischen entlang der x-Achse verlaufenden Rollen 22. Diese könnten als Rückfallelement dienen, falls eine der Rollen 22 ausfällt.

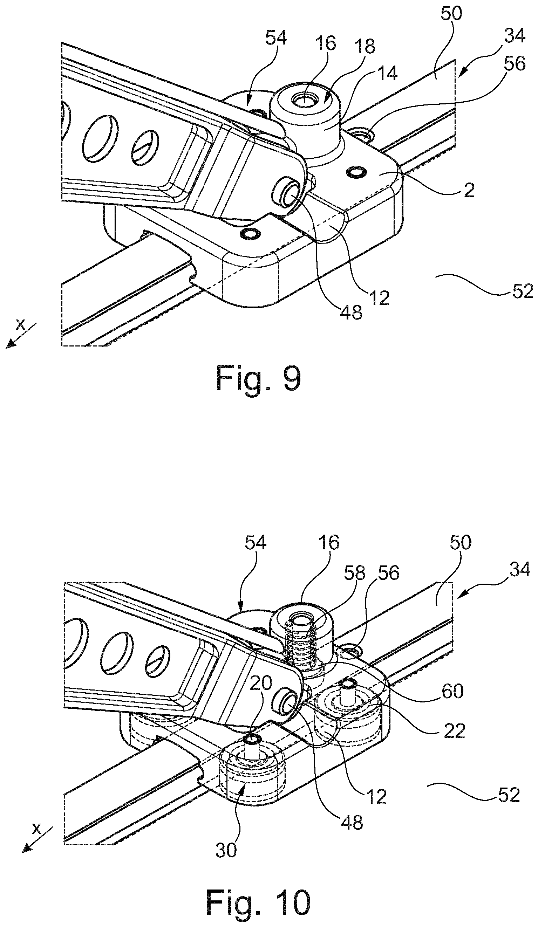

Fig. 3 stellt den Schlitten 2 in einer Seitenansicht dar. Hier ist besonders die flache Form des Schlittens 2 ersichtlich, welche sich durch die Anordnung der Rollen 22 in einer gemeinsamen Ebene ergibt. Die Führung 14 ragt relativ weit von der Oberfläche 4 des Schlittens 2 nach oben. In der momentanen Position des Arretierkörpers 16 ist dieser nicht zu sehen. Hieraus kann ein Benutzer unmittelbar erkennen, dass der Arretierkörper 16 in einer dem Schlitten 2 arretierenden Stellung angeordnet ist, was insbesondere anhand der Figuren 9-12 verständlicher wird. Desweiteren ist die konzentrische Anordnung der Öffnung 10 und der Ausbuchtungen 12 deutlich erkennbar.

Fig. 4 zeigt den Schlitten 2 in einer räumlichen Darstellung von der Unterseite. Hier sind zunächst alle vier Rollen 22 zu sehen. Die Rollen 22, die einander gegenüberliegenden Nasen 24 sowie eine innere, obere Begrenzungsfläche 26 schließen den Hohlraum 8 ein. Insgesamt weist dieser eine in x-Richtung verlaufende, längliche Erstreckung auf. Der Arretierkörper 16 ist zudem aus dieser Perspektive sichtbar und erstreckt sich weit in den Hohlraum 8 hinein. Die Rollen 22 weisen eine Umfangsfläche 28 auf, welche hier beispielhaft von einer zentralen Rille 30 durchsetzt ist.

Fig. 5 zeigt nun basierend auf den vorhergehenden Darstellungen einen Teil eines Befestigungssystems 32 für Passagiersitze mit einer Führungsschiene 34 und einem die Führungsschiene 34 umschließenden Schlitten 2. Die Führungsschiene 34 besitzt einen Auflagebereich 36, welcher zwei in y-Richtung einander gegenüberliegende Auswölbungen 38 besitzt. Der Auflagebereich 36 sitzt auf einem Basisbereich 40, zwischen dem Basisbereich 40 und dem Auflagebereich 36 befinden sich zwei in y-Richtung einander gegenüberliegende Hinterschneidungen 42. Die Nasen 24, welche sich dichter aufeinander zulaufen als zwei in y-Richtung gegenüberliegende Rollen 22, sind derart angeordnet, dass sie mit einer Spielpassung in die Hinterschneidung 42 ragen. Die Rollen 22 befinden sich mit ihren Rillen 30 im Eingriff mit den Auswölbungen 38. Folglich umschließen zwei Rollenpaare mit jeweils zwei Rollen 22 die Führungsschiene 34 und sind zusätzlich durch die Nasen 24 an der Führungsschiene 34 gesichert. Dadurch ist der Schlitten 2 entlang der x-Richtung an der Führungsschiene 34 führbar.

Zur Verdeutlichung der Relativpositionen der Nasen 24 sowie von Aufnahmeräumen 44 für die Rollen 22 zeigt Fig. 6 dieselbe Darstellung wie Fig. 5, jedoch unter Entfernung der Rollen 22.

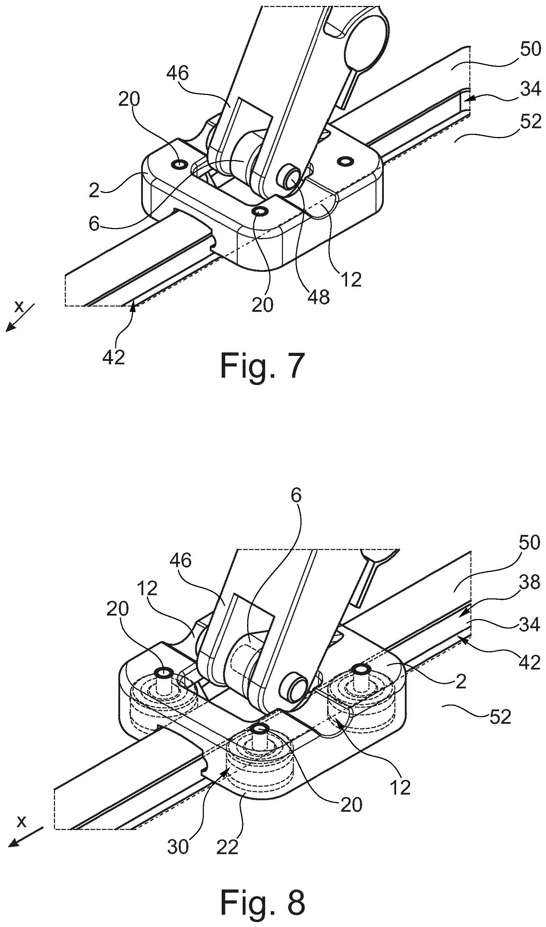

Die Anbindung eines Passagiersitzes an einen Schlitten 2 wird indes in Fig. 7 dargestellt. Hier befindet sich ein vorderer Sitzfuß 46, der beispielhaft gabelförmig gestaltet ist, an dem Flansch 6 und wird durch einen Bolzen 48 gesichert. Zur Erreichbarkeit des Bolzens 48 aus einer Querrichtung sind die Ausbuchtungen 12 vorteilhaft, denn hier kann ein Werkzeug angesetzt werden und um eine durch die Ausrichtung der Öffnung 10 vorgegebene Richtung rotiert werden. Durch die Aufnahme des vorderen Sitzfußes 46 an dem Flansch 6 kann eine gelenkige Verbindung geschaffen werden, die eine mechanische Verspannung zwischen dem Sitzfuß 46 und Schlitten 2 verhindert.

Die Führungsschiene 34 ist in der gezeigten Darstellung zudem durch ein flächiges Abdeckelement 50 abgedeckt, um Beschädigungen und Verschmutzungen vorzubeugen. Das Abdeckelement 50 kann beispielhaft in Form eines streifenförmigen Teppichabschnitts realisiert werden, der dem umgebenden Teppich 52 beidseits der Führungsschiene 34 entsprechen kann. Eine Ausgestaltung des Hohlraums 8 ist zur Realisierung einer solchen, mechanisch einfachen und kostengünstigen Abdeckung 50 durch Einräumung eines ausreichenden vertikalen Abstandes zur Führungsschiene ohne weiteres möglich.

In Fig. 8 wird dieselbe Darstellung mit transparenter äußerer Hülle des Schlittens 2 gezeigt. Hier ist ersichtlich, wie die Rillen 30 der Rollen 22 mit den Auswölbungen 38 der Führungsschiene 34 im Eingriff sind.

Fig. 9 zeigt einen hinteren Sitzfuß 54, der auf dieselbe Weise mit dem Schlitten 2 verbunden ist, wie der vordere Sitzfuß 46. Ferner ist erkennbar, dass der Arretierkörper 16 bündig mit der Außenseite 18 der Führung 14 abschließt, so dass er in den Hohlraum 8 hineinragt. Direkt hinter dem Schlitten 2 ist eine Rastöffnung 56 in der Führungsschiene 34 angeordnet, welche zur Aufnahme des Arretierkörpers 16 dient. Da sich dieser in einer abgesenkten Neutralstellung befindet, ist direkt unterhalb des Arretierkörpers 16 eine weitere Rastöffnung 56 positioniert. Durch das Eintauchen des Arretierkörpers 16 in eine Rastöffnung 56 erfolgt eine Arretierung in x-Richtung erfolgen, so dass der Schlitten 2 seine eingestellte Position beibehält.

Wie in der teiltransparenten Darstellung in Fig. 10 gezeigt, wird der Arretierkörper 16 über eine Feder 58 in eine zu der Führungsschiene 34 gewandte Position gedrängt. Hierdurch kann der Arretierkörper 16 eine Anschlagsfläche 60 aufweisen, die der Oberseite 18 der Führung 14 entgegengesetzt ist. Die Feder 58 erstreckt sich zwischen einer oberen, inneren Begrenzung der Führung 14 bis zu der Anschlagsfläche 60 und übt permanent eine Druckkraft auf den Arretierkörper 16 aus, die in Richtung der Führungsschiene 34 gerichtet ist. Durch Lösen des Arretierkörpers 16, d.h. durch seine Bewegung von der Führungsschiene 34 weg, rastet dieser automatisch in einer Rastöffnung 56 wieder ein, wenn der Arretierkörper 16 und die Rastöffnung 56 fluchten.

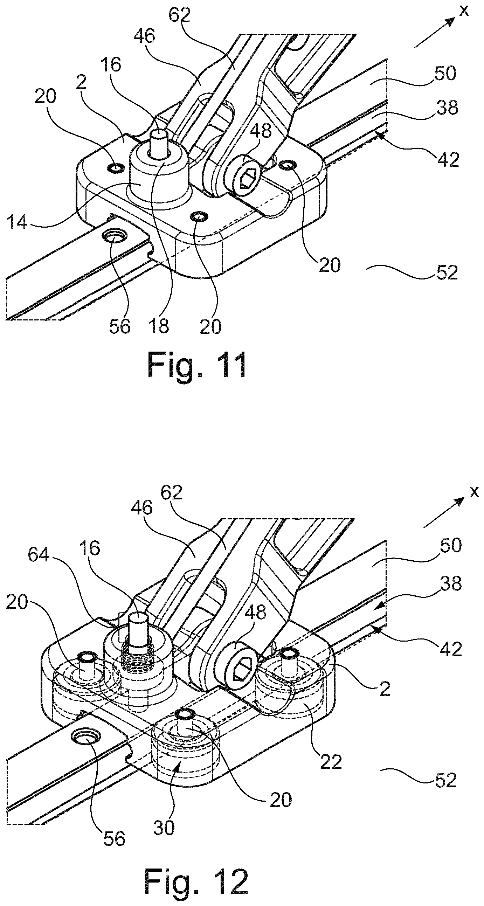

Zum Lösen der Arretierung kann ein Betätigungsmechanismus 62 vorliegen, der in den Figuren 11 und 12 als linienförmiges Bewegungselement dargestellt ist. Durch einen Hebel, ein Zugelement oder ein anderes Betätigungsmittel kann eine Kraft auf den Arretierkörper 16 ausgeübt werden, die der Federkraft entgegengesetzt ist. Die Details der Ausführung des Betätigungsmechanismus 62 sind für das erfindungsgemäße Befestigungssystem unerheblich. Wird die Arretierung gelöst, so ragt der Arretierkörper 16 deutlich über die Außenfläche 18 hervor. Dieser herausragende Teil ist optisch auffällig markiert, sodass einem Benutzer unmittelbar beim Betrachten des Schlittens 2 auffällt, dass die Arretierung gelöst ist.

Wie in Fig. 12 in einer teiltransparenten Darstellung gezeigt wird, ist die Feder 58 komprimiert und ein farbig markierter Abschnitt 64 des Arretierkörper 16 ragt aus der Führung 14 heraus. Es ist vorstellbar, dass sämtliche Arretierkörper 16 durch einen gemeinsamen Betätigungsmechanismus 62 bewegt werden. Dies ist hier der Einfachheit halber jedoch nicht dargestellt.

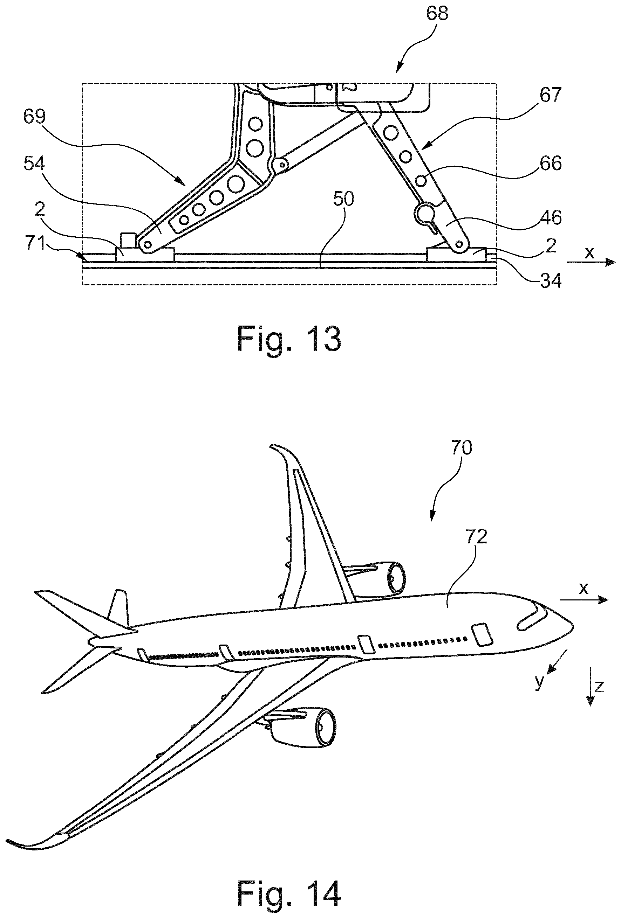

Fig. 13 zeigt in einer Seitenansicht ein Sitzgestell 66, welches ein vorderes Sitzbein 67 und ein hinteres Sitzbein 69 besitzt. Das Sitzgestell 66 ist mit mehreren Schlitten 2 über die vorhergehend gezeigten Sitzfüße 46 und 54 an Führungsschienen 34 befestigt, welche parallel zueinander in einer Längsrichtung x einer Kabine des betreffenden Fahrzeugs in einem Fußboden 71 verlaufen. Dies kann beispielsweise ein Teil einer Passagiersitzeinrichtung 68 in Form eines Passagiersitzes oder einer Passagiersitzgruppe in einer Kabine eines Flugzeugs 70 sein. Letzteres wird in Fig. 14 dargestellt.

Das Flugzeug 70 weist eine Kabine 72 auf, die mit mehreren derartigen Führungsschienen 34 ausgestattet ist, welche sich parallel zu der Längsachse X des Flugzeugs 70 erstrecken. Durch eine solchen Aufbau kann erreicht werden, Sitzabstände zwischen einzelnen Flugmissionen zu ändern und gleichzeitig einem Kabinenpersonal erlauben, dies selbstständig durchzuführen. Es sind weder aufwändige Werkzeuge noch eine hohe Kraft erforderlich, um die betreffenden Passagiersitze 68 entlang der Längsachse x zu verschieben.

Ergänzend sei darauf hingewiesen, dass "aufweisend" keine anderen Elemente oder Schritte ausschließt, und "ein" oder "eine" keine Vielzahl ausschließt. Ferner sei darauf hingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können. Bezugszeichen in den Ansprüchen sind nicht als Einschränkung anzusehen.

## Patentansprüche

1. Befestigungssystem (32) für Passagiersitze in einer Kabine (72) eines Fahrzeugs (70), aufweisend:
- zwei oder mehr in oder an einem Fußboden (71) der Kabine (72) integrierbare Führungsschienen (34), und
- mehrere mit den Führungsschienen (34) in Eingriff bringbare Schlitten (2), welche einen Flansch (6) zum Verbinden mit einem Passagiersitz (68) aufweisen, um den betreffenden Passagiersitz (68) an einer Führungsschiene (34) zu haltern,
wobei jede Führungsschiene (34) einen Profilquerschnitt senkrecht zu einer Haupterstreckungsachse (x) aufweist, der einen Basisbereich (40), einen Auflagebereich (36) und mindestens eine dazwischenliegende Hinterschneidung (42) besitzt,
wobei jeder Schlitten (2) einen Hohlraum (8) aufweist, der komplementär zu dem Profilquerschnitt der Führungsschiene (34) ausgebildet ist und einen mit der Hinterschneidung (42) in Eingriff bringbaren Einschnürungsbereich (9) aufweist, so dass der Auflagebereich (36) durch den Hohlraum (8) des Schlittens (2) umschließbar ist, und
wobei jeder Schlitten (2) mindestens eine drehbar gelagerte Rolle (22) besitzt, die in den Einschnürungsbereich (9) ragt und mit einer Oberfläche der Führungsschiene in Flächenkontakt bringbar ist.

2. Befestigungssystem (32) nach Anspruch 1,
ferner aufweisend ein flächiges Abdeckelement (50), das auf dem Auflagebereich (36) fixiert ist.

3. Befestigungssystem (32) nach Anspruch 1 oder 2,
wobei der Profilquerschnitt zwei einander gegenüberliegende Hinterschneidungen (42) aufweist.

4. Befestigungssystem (32) nach einem der vorhergehenden Ansprüche,
wobei der Schlitten (2) für jede Hinterschneidung zwei voneinander beabstandete Rollen (22) aufweist, die jeweils mit der Oberfläche der Führungsschiene (34) in Flächenkontakt bringbar sind.

5. Befestigungssystem (32) nach Anspruch 4,
wobei der Profilquerschnitt zwei einander gegenüberliegende Hinterschneidungen (42) aufweist und
wobei der Schlitten (2) zumindest ein Paar einander gegenüberliegender Rollen (22) zum Eingreifen in zwei einander gegenüberliegende Bereiche des Profilquerschnitts besitzt.

6. Befestigungssystem (32) nach Anspruch 4 oder 5,
wobei alle Rollen (22) auf einer gemeinsamen Ebene angeordnet sind und um jeweils eine Achse (20) drehbar gelagert sind, die senkrecht zu der gemeinsamen Ebene stehen.

7. Befestigungssystem (32) nach einem der vorhergehenden Ansprüche,
wobei mindestens ein Schlitten (2) einen bewegbar gelagerten Arretierkörper (16) aufweist, der in den Hohlraum (8) hinein und aus dem Hohlraum (8) heraus bewegbar ist, und
wobei die Führungsschiene (34) Rastöffnungen (56) aufweist, die bei im Eingriff mit der Führungsschiene (34) befindlichem Schlitten (2) mit dem Arretierkörper (16) in Eingriff bringbar sind.

8. Befestigungssystem (32) nach Anspruch 7,
wobei der Arretierkörper (16) ein federnd gelagerter Stift ist, der durch eine Federkraft in eine Neutralstellung gedrängt wird, in der der Arretierkörper (16) in dem Hohlraum (8) liegt.

9. Befestigungssystem (32) nach Anspruch 8,
wobei der Arretierkörper (16) in einer Führung (14) angeordnet ist und bündig mit einer Außenfläche der Führung (14) bündig abschließt, wenn er in seiner Neutralstellung ist.

10. Befestigungssystem (32) nach einem der vorhergehenden Ansprüche,
wobei die Rolle (22) eine umfangsseitig verlaufende Rille (30) aufweist, die an eine Kontur der Oberfläche der Führungsschiene (34) angepasst ist.

11. Befestigungssystem (32) nach einem der vorhergehenden Ansprüche,
wobei der Schlitten (2) mindestens eine in den Einschnürungsbereich (9) ragende Nase (24) aufweist, die mit der Hinterschneidung (42) eine Spielpassung bildet.

12. Passagiersitzsystem für eine Kabine (72) eines Fahrzeugs, aufweisend:
mindestens eine Passagiersitzeinrichtung (68) mit einem Sitzgestell (66), und
ein Befestigungssystem (32) nach einem der Ansprüche 1 bis 11,
wobei das Befestigungssystem (32) zwei voneinander beabstandete, parallel zueinander verlaufende Führungsschienen (34) aufweist,
wobei das Sitzgestell (68) der mindestens einen Passagiersitzeinrichtung (68) zwei Paare voneinander beabstandeter Sitzbeine (67, 69) aufweist, welche jeweils mit einem Schlitten (2) verbunden sind, und
wobei die Schlitten (2) in Eingriff mit den Führungsschienen (34) sind.

13. Passagiersitzsystem nach Anspruch 12,
wobei die Führungsschienen (34) auf Sitzschienen befestigbar sind, die in einem Fußboden (71) einer Kabine (72) des Fahrzeugs (70) angeordnet sind.

14. Fahrzeug (70) mit einer Kabine (72), einem Fußboden (71) und mindestens einem Passagiersitzsystem (32) nach Anspruch 12 oder 13.

15. Fahrzeug (70) nach Anspruch 14, wobei das Fahrzeug (70) ein Flugzeug (70) ist.

## Claims

1. Fastening system (32) for passenger seats in a cabin (72) of a vehicle (70), having:
- two or more guide rails (34) that can be integrated into or onto a floor (71) of the cabin (72), and
- a plurality of slides (2), which can be brought into engagement with the guide rails (34) and which have a flange (6) for connection to a passenger seat (68) in order to retain the relevant passenger seat (68) on a guide rail (34),
wherein each guide rail (34) has a profile cross section, perpendicularly to a main axis of extent (x), which has a base region (40), a supporting region (36) and at least one undercut (42) situated therebetween,
wherein each slide (2) has a cavity (8), which is of complementary design with the profile cross section of the guide rail (34), and a necked region (9), which can be brought into engagement with the undercut (42), thus enabling the supporting region (36) to be enclosed by the cavity (8) of the slide (2), and
wherein each slide (2) has at least one rotatably mounted roller (22), which projects into the necked region (9) and can be brought into surface contact with a surface of the guide rail.

2. Fastening system (32) according to Claim 1,
furthermore having a flat cover element (50), which is fixed on the supporting region (36).

3. Fastening system (32) according to Claim 1 or 2,
wherein the profile cross section has two mutually opposite undercuts (42).

4. Fastening system (32) according to any one of the preceding claims,
wherein the slide (2) has two mutually spaced rollers (22) for each undercut, which can each be brought into surface contact with the surface of the guide rail (34) .

5. Fastening system (32) according to Claim 4,
wherein the profile cross section has two mutually opposite undercuts (42), and
wherein the slide (2) has at least one pair of mutually opposite rollers (22) for engagement in two mutually opposite regions of the profile cross section.

6. Fastening system (32) according to Claim 4 or 5,
wherein all the rollers (22) are arranged in a common plane and are mounted so as to be rotatable about a respective axis (20) which is perpendicular to the common plane.

7. Fastening system (32) according to any one of the preceding claims,
wherein at least one slide (2) has a movably mounted retaining body (16), which can be moved into the cavity (8) and out of the cavity (8), and
wherein the guide rail (34) has latching openings (56), which can be brought into engagement with the retaining body (16) when the slide (2) is in engagement with the guide rail (34).

8. Fastening system (32) according to Claim 7,
wherein the retaining body (16) is a sprung pin, which is urged by a spring force into a neutral position, in which the retaining body (16) is in the cavity (8).

9. Fastening system (32) according to Claim 8,
wherein the retaining body (16) is arranged in a guide (14) and ends flush with an outer surface of the guide (14) when it is in its neutral position.

10. Fastening system (32) according to any one of the preceding claims,
wherein the roller (22) has a circumferential groove (30) which is matched to a contour of the surface of the guide rail (34).

11. Fastening system (32) according to any one of the preceding claims,
wherein the slide (2) has at least one projection (24), which projects into the necked region (9) and forms a clearance fit with the undercut (42).

12. Passenger seat system for a cabin (72) of a vehicle, having:
at least one passenger seat device (68) having a seat frame (66), and
a fastening system (32) according to any one of Claims 1 to 11,
wherein the fastening system (32) has two mutually spaced guide rails (34) extending parallel to one another,
wherein the seat frame (68) of the at least one passenger seat device (68) has two pairs of mutually spaced seat legs (67, 69), which are each connected to one slide (2), and
wherein the slides (2) are in engagement with the guide rails (34).

13. Passenger seat system according to Claim 12,
wherein the guide rails (34) can be fastened on seat rails, which are arranged in a floor (71) of a cabin (72) of the vehicle (70) .

14. Vehicle (70) having a cabin (72), a floor (71) and at least one passenger seat system (32) according to Claim 12 or 13.

15. Vehicle (70) according to Claim 14, wherein the vehicle (70) is an aircraft (70).

## Revendications

1. Système de fixation (32) pour sièges de passagers dans une cabine (72) d'un véhicule (70), présentant :
- deux ou plus de deux rails de guidage (34) pouvant être intégrés dans ou sur un plancher (71) de la cabine (72), et
- plusieurs chariots (2) pouvant être amenés en prise avec les rails de guidage (34), lesquels présentent une bride (6) pour le raccordement à un siège de passager (68), afin de retenir le siège de passager (68) concerné sur un rail de guidage (34),
chaque rail de guidage (34) présentant une section transversale profilée perpendiculairement à un axe d'étendue principale (x) qui possède une région de base (40), une région d'appui (36) et au moins une contre-dépouille (42) disposée entre celles-ci,
chaque chariot (2) présentant une cavité (8) qui est réalisée de manière complémentaire à la section transversale profilée du rail de guidage (34) et présentant une région de rétrécissement (9) pouvant être amenée en prise avec la contre-dépouille (42), de telle sorte que la région d'appui (36) puisse être entourée par la cavité (8) du chariot (2), et
chaque chariot (2) possédant au moins une roulette (22) supportée de manière rotative, qui pénètre dans la région de rétrécissement (9) et peut être amenée en contact de surface avec une surface du rail de guidage.

2. Système de fixation (32) selon la revendication 1, présentant en outre un élément de recouvrement (50) plan qui est fixé sur la région d'appui (36).

3. Système de fixation (32) selon la revendication 1 ou 2,
dans lequel la section transversale profilée présente deux contre-dépouilles (42) opposées l'une à l'autre.

4. Système de fixation (32) selon l'une des revendications précédentes,
dans lequel le chariot (2), pour chaque contre-dépouille, présente deux roulettes (22) espacées l'une de l'autre qui peuvent être amenées en contact de surface respectivement avec la surface du rail de guidage (34).

5. Système de fixation (32) selon la revendication 4, dans lequel la section transversale profilée présente deux contre-dépouilles (42) opposées l'une à l'autre, et dans lequel le chariot (2) possède au moins une paire de roulettes (22) opposées l'une à l'autre pour l'entrée en prise dans deux régions opposées l'une à l'autre de la section transversale profilée.

6. Système de fixation (32) selon la revendication 4 ou 5,
dans lequel toutes les roulettes (22) sont disposées sur un plan commun et sont supportées de manière rotative autour d'un axe (20) respectif, qui s'étend perpendiculairement au plan commun.

7. Système de fixation (32) selon l'une des revendications précédentes,
dans lequel au moins un chariot (2) comprend un corps de blocage (16) supporté de manière déplaçable, qui est déplaçable dans la cavité (8) et hors de la cavité (8), et
dans lequel le rail de guidage (34) comprend des ouvertures d'encliquetage (56) qui peuvent être amenées en prise avec le corps de blocage (16) lorsque le chariot (2) se trouve en prise avec le rail de guidage (34).

8. Système de fixation (32) selon la revendication 7, dans lequel le corps de blocage (16) est une goupille supportée par ressort, qui est pressée par une force de ressort dans une position neutre dans laquelle le corps de blocage (16) se situe dans la cavité (8).

9. Système de fixation (32) selon la revendication 8, dans lequel le corps de blocage (16) est disposé dans un guide (14) et se termine en affleurement avec une surface extérieure du guide (14) lorsqu'il est dans sa position neutre.

10. Système de fixation (32) selon l'une des revendications précédentes,
dans lequel la roulette (22) présente une gorge (30) s'étendant sur la périphérie, laquelle gorge est adaptée à un contour de la surface du rail de guidage (34).

11. Système de fixation (32) selon l'une des revendications précédentes,
dans lequel le chariot (2) présente au moins un ergot (24) faisant saillie dans la région de rétrécissement (9), lequel ergot forme avec la contre-dépouille (42) un ajustement avec jeu.

12. Système de sièges de passagers pour une cabine (72) d'un véhicule, présentant :
au moins un dispositif de siège de passager (68) avec un bâti de siège (66), et un système de fixation (32) selon l'une quelconque des revendications 1 à 11,
le système de fixation (32) présentant deux rails de guidage (34) espacés l'un de l'autre, s'étendant parallèlement l'un à l'autre,
le bâti de siège (68) de l'au moins un dispositif de siège de passager (68) présentant deux paires de pieds (67, 69) espacés les uns des autres, lesquelles sont respectivement connectées à un chariot (2), et
les chariots (2) étant en prise avec les rails de guidage (34) .

13. Système de sièges de passagers selon la revendication 12,
dans lequel les rails de guidage (34) peuvent être fixés sur des rails de sièges qui sont disposés dans un plancher (71) d'une cabine (72) du véhicule (70).

14. Véhicule (70) comprenant une cabine (72), un plancher (71) et au moins un système de sièges de passagers (32) selon la revendication 12 ou 13.

15. Véhicule (70) selon la revendication 14, le véhicule (70) étant un avion (70).
